(19) Europäisches Patentamt / European Patent Office / Office européen des brevets

(11) **EP 2 873 450 A1**

(12) **DEMANDE DE BREVET EUROPEEN**

(43) Date de publication:
**20.05.2015 Bulletin 2015/21**

(51) Int Cl.:
***B01D 53/14*** *(2006.01)*

(21) Numéro de dépôt: **14306802.1**

(22) Date de dépôt: **13.11.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **19.11.2013 FR 1361367**

(71) Demandeur: **IFP Energies nouvelles**
**92852 Rueil-Malmaison Cedex (FR)**

(72) Inventeurs:
• **Giroudiere, Fabrice**
 **69530 ORLIENAS (FR)**
• **Gomez, Adrien**
 **69003 LYON (FR)**

(54) **Procédé et installation d'élimination des composés acides d'effluents gazeux d'origine différente**

(57) L'invention porte sur un procédé et une installation pour éliminer les composés acides contenus dans deux effluents gazeux d'origine différente, comprenant la mise en oeuvre d'une seule solution absorbante à base d'amines circulant entre un premier absorbeur et un régénérateur, et un deuxième absorbeur et le même régénérateur. La présente invention s'applique par exemple avantageusement au captage de $CO_2$ au sein d'une même installation de captage d'effluents gazeux produits lors de la production d'hydrogène par reformage à la vapeur d'une charge hydrocarbonée gazeuse, tels que des fumées de combustion et du syngas.

**FIG. 4**

EP 2 873 450 A1

**Description**

**Domaine de l'invention**

La présente invention concerne le domaine de la désacidification d'effluents gazeux comprenant des composés acides tels que le dioxyde de carbone ($CO_2$) et l'hydrogène sulfuré ($H_2S$) au moyen d'une solution absorbante à base d'amines. La présente invention s'applique en particulier au captage de $CO_2$ lors de la production d'hydrogène par reformage à la vapeur d'une charge hydrocarbonée gazeuse et à l'élimination de l'$H_2S$ d'effluents gazeux produits lors de l'hydrotraitement de charges hydrocarbonées liquides.

**Contexte général**

La maîtrise des émissions de gaz à effet de serre, notamment des émissions de $CO_2$, devient une exigence de plus en plus forte pour tous les secteurs économiques, en particulier ceux concernant la production d'énergie. La production d'hydrogène industrielle, généralement basée sur le reformage à la vapeur du gaz naturel, fait partie de ces secteurs qui émettent de grandes quantités de $CO_2$.

Une des différentes voies possibles pour maîtriser les émissions de $CO_2$ est le captage de $CO_2$ par des procédés d'absorption mettant en oeuvre une solution aqueuse d'amines, par exemple des alcanolamines comme la monoéthanolamine (MEA), la diethanolamine (DEA) ou la N-méthyldiéthanolamine (MDEA). Le $CO_2$ capté peut ensuite être séquestré ou réutilisé pour des applications diverses.

De tels procédés d'absorption peuvent également être mis en oeuvre pour éliminer les composés acides contenus dans différents types d'effluents gazeux, parmi lesquels les gaz acides riches en $H_2S$ produits lors du raffinage du pétrole dans les procédés d'hydrotraitements de coupes pétrolières.

Lors de la production d'hydrogène industrielle à partir de gaz naturel, on réalise une réaction de reformage à la vapeur, ou vaporeformage, du gaz naturel (en anglais SMR: Steam Methane Reforming) conduisant à la formation de gaz de synthèse comprenant du monoxyde de carbone (CO) et du dihydrogène ($H_2$), suivie d'une réaction de conversion du monoxyde de carbone (CO) du gaz de synthèse afin de maximiser la production d'hydrogène.

La réaction équilibrée de vaporeformage s'écrit pour le métha-ne:

$$CH_4 + H_2O \leftrightarrow CO + 3H_2 \qquad \Delta H^0_{298} = 206,0 \; kJ/mol \qquad (1)$$

La réaction de conversion du CO généralement appelée réaction de Water Gas Shift (WGS) s'écrit de la manière suivante:

$$CO + H_2O \leftrightarrow CO_2 + H_2 \qquad \Delta H^0_{298} = -41,0 \; kJ/mol \qquad (2)$$

Le bilan des deux réactions réalisées donne:

$$CH_4 + 2H_2O \leftrightarrow CO_2 + 4H_2 \qquad \Delta H^0_{298} = 165,0 \; kJ/mol \qquad (3)$$

Le bilan de ces deux réactions étant très endothermique, la production d'hydrogène par vaporeformage est mise en oeuvre dans des fours fonctionnant à haute température. Les fumées de combustion issues de ces fours contiennent une grande quantité de $CO_2$ qu'il est souhaitable de capter avant la libération des fumées dans l'atmosphère. Les fumées de combustion constituent donc un première source de $CO_2$ lors de la production d'hydrogène par reformage à la vapeur de gaz naturel.

Une deuxième source de $CO_2$ lors de la production d'hydrogène industrielle par vaporeformage est la réaction (2) de conversion du CO. Le $CO_2$ ainsi formé doit être retiré du mélange gazeux, tout comme l'eau résiduelle, afin de produire de l'hydrogène presque pur.

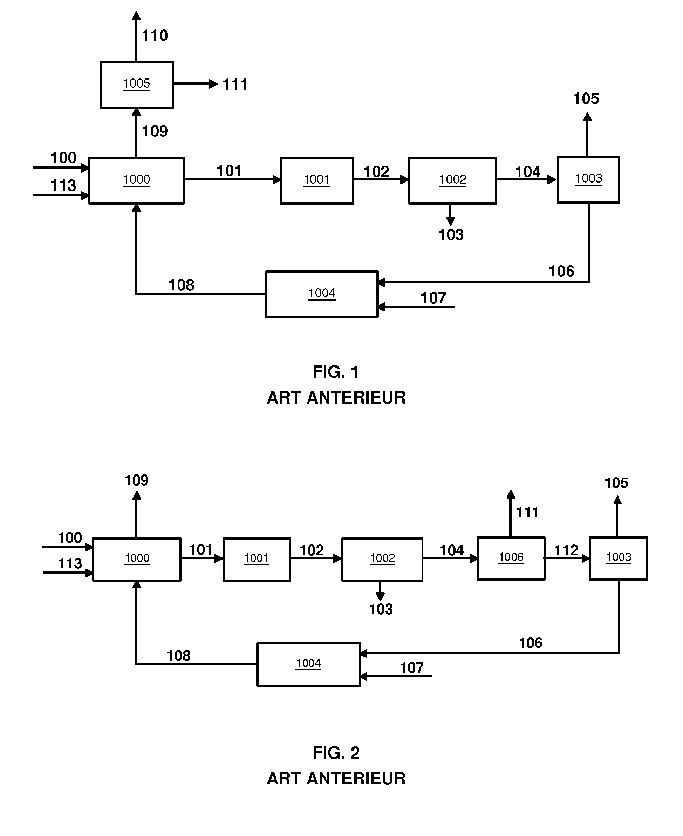

La figure 1 illustre un tel procédé de production d'hydrogène dans lequel on met en oeuvre un captage de $CO_2$ au niveau des fumées de combustion issues des fours.

Une charge 100 hydrocarbonée, typiquement du gaz naturel ou du naphta, alimente, en mélange avec de la vapeur d'eau 113, une section de reformage catalytique 1000.

La section de reformage 1000 est typiquement un réacteur échangeur consistant en une calandre enfermant une pluralité de tubes, structure que l'homme du métier qualifie de tubes/calandre, dans lequel la charge hydrocarbonée circule à l'intérieur des tubes, et un fluide caloporteur circule à l'extérieur des tubes. Ce fluide caloporteur consiste généralement en des fumées de combustion. La combustion peut être externe au réacteur, tel qu'illustré par les brûleurs 1004 de la figure 1. Le réacteur échangeur peut alternativement intégrer la combustion générant les fumées chaudes, par exemple à l'aide de brûleurs intégrés tels que ceux décrits dans le brevet FR 2.913.097. On peut alors parler de four tubulaire pour désigner un tel réacteur échangeur.

Des catalyseurs, par exemple à base de nickel supporté sur alumine, sont typiquement mis en oeuvre dans les tubes chauffés par radiation, par exemple dans un four tubulaire. La thermodynamique des réactions de reformage à la vapeur conduit à opérer en sortie de réacteur à la température la plus élevée possible pour maximiser la conversion du méthane en hydrogène, typiquement une température comprise entre 850°C et 900°C. La température d'entrée du four est quant à elle par exemple comprise entre 540°C et 580°C. La pression du procédé se situe généralement entre 20 bar absolu et 30 bar absolu.

De la section de reformage 1000 sort un effluent 101 comprenant principalement du gaz de synthèse $H_2$ + CO, et comportant de la vapeur d'eau $H_2O$, et du $CH_4$ non converti lors du reformage. D'autres composés acides, tels que du $CO_2$, de l'$H_2S$, des mercaptans, du COS, du $CS_2$, le $SO_2$, contenus initialement dans la charge 100, peuvent être présents dans l'effluent 101. L'effluent 101 est envoyé après refroidissement à la section 1001 de conversion du CO où est réalisée la réaction WGS (2) décrite ci-dessus. L'eau contenue dans le mélange riche en hydrogène 102 en sortie de la section 1001 est retirée par refroidissement et condensation dans une section 1002 pour produire le flux d'eau 103 et un mélange riche en hydrogène et appauvri en eau 104. Le mélange gazeux 104 est ensuite envoyé dans une unité de purification par adsorption modulée en pression 1003 (PSA en anglais: Pressure Swing Adsorption). Deux flux sont alors produits dans l'unité 1003: un flux d'hydrogène pratiquement pur 105 et une purge 106 contenant du $CO_2$, du $CH_4$ non converti, et éventuellement d'autres composés acides initialement présent dans la charge 100. La purge 106 est généralement utilisée comme combustible, en complément d'un autre combustible 107, tel que du gaz naturel ou un gaz/liquide de raffinerie, pour alimenter les brûleurs 1004 qui permettent la génération des fumées chaudes 108 utilisées en tant que fluide caloporteur dans la section de reformage 1000.

Les fumées de combustion refroidies 109 sortant de la section de vaporeformage 1000 peuvent être traitées dans une unité de captage de $CO_2$ 1005 avant d'être envoyée vers une cheminée. Le captage de $CO_2$ peut être réalisé par une technologie de lavage des fumées avec une solution absorbante à base d'amines, mettant en oeuvre un absorbeur dans lequel les fumées sont mises en contact avec la solution absorbante pour retirer le $CO_2$ des fumées, et un régénérateur pour régénérer thermiquement la solution absorbante et libérer le $CO_2$ absorbé qu'elle contient et la recycler dans l'absorbeur. Le flux 110 représente les fumées purifiées du $CO_2$, et le flux 111 représente le flux riche en $CO_2$ sortant du régénérateur de l'unité de captage 1005.

Un inconvénient majeur du captage de $CO_2$ selon la figure 1 réside dans le fait qu'une quantité importante de $CO_2$ est capté sur des fumées de combustion à pression atmosphérique, ce qui impose d'utiliser des débits importants de solution absorbante, et donc d'avoir des débits importants de solution à régénérer. Or une limitation principale des procédés à base de solutions absorbantes aux amines couramment utilisées réside dans la consommation énergétique nécessaire à la régénération de la solution. Par exemple, il est bien connu que l'énergie nécessaire à la régénération par distillation d'une solution d'amine peut se décomposer selon trois postes différents : l'énergie nécessaire pour réchauffer le solvant entre la tête et le fond du régénérateur, l'énergie nécessaire pour abaisser la pression partielle de gaz acide dans le régénérateur par vaporisation d'un gaz de "stripping", et enfin l'énergie nécessaire pour casser la liaison chimique entre l'amine et le $CO_2$. Les deux premiers postes sont proportionnels aux débits de solution absorbante qu'il est nécessaire de faire circuler dans l'unité pour réaliser une spécification donnée. Ainsi la consommation énergétique nécessaire à la régénération est directement impactée par des débits élevés de solution à régénérer, de même que la taille des colonnes et les coût d'investissement associés.

La figure 2 illustre la mise en oeuvre d'un captage de $CO_2$ à un autre niveau de l'installation de production d'hydrogène, permettant le captage du $CO_2$ produit par les réactions de reformage et de conversion du CO. Selon ce schéma, le $CO_2$ est capté dans une unité de captage de $CO_2$ 1006 similaire à l'unité 1005 de la figure 1, positionnée cette fois en aval de l'unité de conversion du CO 1001 où se produit la réaction WGS selon l'équation (2) et en aval de l'unité de condensation de l'eau 1002. Le $CO_2$ est retiré de l'effluent 104 issu de l'unité de refroidissement et la condensation 1002, avant son entrée dans l'unité PSA de purification de l'hydrogène 1003. Le flux 112 envoyé dans l'unité de purification 1003 est pratiquement dépourvu de $CO_2$, et le flux 111 sortant de l'unité de captage 1006 est riche en $CO_2$. La purge 106 produite dans l'unité de purification 1003 et utilisée en tant que combustible par les brûleurs 1004 ne contient quasiment plus de $CO_2$.

Un inconvénient majeur de cette solution est que seule une partie du $CO_2$ produit lors du procédé de production d'hydrogène est capté : celui issu des réactions de reformage et de conversion du CO mais pas celui issu de la combustion dans le four. En effet, le $CO_2$ issu de la combustion dans les brûleurs 1004 n'est pas capté. En conséquence, les fumées de combustion 109 contiennent la plus grande part du $CO_2$ généré par la combustion du $CH_4$ non converti dans le reformeur, ce qui représente entre 15 % et 25 % molaire du $CH_4$ entrant, auquel il faut ajouter le $CO_2$ issu de la combustion du combustible d'appoint 107.

Objectifs et résumé de l'invention

La présente invention a pour objectif de remédier, au moins en partie, aux problèmes de l'art antérieur décrit ci-dessus.

La présente invention vise ainsi à fournir un procédé de désacidification mettant en oeuvre une solution absorbante à base d'amines, pour capter efficacement le $CO_2$ formé lors d'une production industrielle d'hydrogène par reformage à la vapeur d'une charge hydrocarbonée gazeuse, tout en limitant les coûts d'investissement de l'installation de captage de $CO_2$ et en limitant les besoins énergétiques pour la régénération de la solution absorbante.

Plus généralement, la présente invention vise à fournir un procédé d'élimination des composés acides contenus dans au moins deux effluents gazeux d'origine différente par mise en oeuvre d'une solution absorbante à base d'amines, tout en limitant les coûts d'investissement de l'installation d'élimination des composés acides et en limitant les besoins énergétiques pour la régénération de la solution absorbante.

Selon l'invention, on entend par effluents gazeux d'origine différente des effluents gazeux généralement produits par des réactions différentes, qui peuvent se distinguer par leur composition, et qui sont générés dans des conditions opératoires distinctes, notamment des conditions de pression et de température différentes. Ainsi la pression de chacun des deux effluents gazeux pouvant être traités selon l'invention est différente, notamment la pression partielle du(des) composé(s) acide(s) à éliminer. Deux effluents gazeux d'origine différentes selon l'invention sont par exemple une fumée de combustion et du gaz de synthèse, tous deux générés dans un procédé de production d'hydrogène par reformage du gaz naturel. Il peut également s'agir de deux gaz acides riches en $H_2S$ issus de deux hydrodésulfurations distinctes à des pressions différentes d'essences, de kérosènes ou de gazoles de nature différente.

Ainsi, pour atteindre au moins l'un des objectifs susvisés, parmi d'autres, la présente invention propose, selon un premier aspect, un procédé d'élimination de composés acides contenus dans un effluent gazeux, dans lequel:

- on met en contact, dans une première colonne d'absorption opérant à une première pression P1, un premier effluent gazeux contenant des composés acides avec un premier flux d'une solution absorbante aqueuse comprenant au moins une amine, pour produire un premier effluent gazeux appauvri en composés acides et une première solution enrichie en composés acides,
- on met en contact, dans une deuxième colonne d'absorption opérant à une deuxième pression P2 supérieure d'au moins 5 bar à la première pression P1, un deuxième effluent gazeux contenant des composés acides avec un deuxième flux de la solution absorbante, pour produire un deuxième effluent gazeux appauvri en composés acides et une deuxième solution enrichie en composés acides,
- on régénère les première et deuxième solutions enrichies en composé acides dans une colonne de régénération pour produire un gaz riche en composés acides, une solution partiellement régénérée et une solution totalement régénérée, et
- on envoie ladite solution partiellement régénérée dans la deuxième colonne d'absorption pour former le deuxième flux de solution absorbante et on envoie la solution totalement régénérée dans la première colonne d'absorption pour former le premier flux de solution absorbante.

La première pression P1 dans la première colonne d'absorption est de préférence comprise entre 1 bar et 190 bar et la deuxième pression P2 dans la deuxième colonne d'absorption est comprise entre 10 bar et 200 bar.

Selon un mode de réalisation, la deuxième pression P2 est supérieure d'au moins 10 bar à la première pression P1, la première pression P1 est comprise entre 1 bar et 6 bar, et la deuxième pression P2 est comprise entre 15 bar et 40 bar.

De préférence, la première solution enrichie en composés acides et la deuxième solution enrichie en composés acides ont une différence de taux de charge en composés acides comprise entre 5 % et 30 %.

On introduit de préférence la première solution enrichie en composés acides à un niveau intermédiaire le long de la colonne de régénération, de manière à ce qu'au moins 50 % des composés acides contenus dans ladite solution soient libérés sous forme de gaz dans la colonne de régénération.

On recueille de avantageusement la solution partiellement régénérée à une hauteur donnée de la colonne de régénération supérieure à la hauteur d'évacuation de la solution totalement régénérée.

Selon un mode de réalisation, le procédé s'applique au captage de $CO_2$ dans un procédé de production d'hydrogène par reformage à la vapeur d'une charge hydrocarbonée gazeuse, dans lequel le premier effluent gazeux est une fumée de combustion issue d'une étape de combustion dans le procédé de production d'hydrogène, et le deuxième effluent gazeux est un mélange gazeux sec riche en hydrogène et comprenant du $CO_2$, ledit mélange étant obtenu au cours du procédé de production d'hydrogène après une étape de conversion à l'eau du CO contenu dans les effluents issus du reformage et après une étape de refroidissement et condensation.

Selon un mode de réalisation, le procédé s'applique captage de l'$H_2S$ dans un procédé d'hydrotraitement d'une charge hydrocarbonée, dans lequel le premier effluent gazeux et le deuxième effluent gazeux à traiter sont des gaz de recycle produits respectivement dans une première unité d'hydrotraitement et une deuxième unité d'hydrotraitement. Selon ce mode de réalisation, la première pression P1 est de préférence comprise entre 20 bar et 190 bar et la deuxième pression P2 est de préférence comprise entre 45 bar et 200 bar.

La présente invention propose également, selon un deuxième aspect, une installation d'élimination de composés acides contenus dans un effluent gazeux pour la mise en oeuvre du procédé selon l'invention. L'installation comprend:

- une première colonne d'absorption et une deuxième colonne d'absorption, comprenant chacune:

  - des moyens de mise en contact entre gaz et liquide;
  - une première conduite en fond de colonne d'introduction d'un effluent gazeux à traiter;
  - une deuxième conduite en tête de colonne d'introduction d'un flux de solution absorbante;
  - une troisième conduite en tête de colonne d'évacuation d'un effluent gazeux traité appauvri en composés acides et
  - une quatrième conduite en fond de colonne d'évacuation d'une solution absorbante enrichie en composés acides ;

- une colonne de régénération comprenant :

  - des moyens de mise en contact entre gaz et liquide ;
  - un rebouilleur ;
  - une conduite d'introduction d'une première solution enrichie en composés acides issue de la première colonne d'absorption,
  - une conduite d'introduction d'une deuxième solution enrichie en composés acides issue de la deuxième colonne d'absorption, en haut de colonne,
  - une conduite d'évacuation d'un gaz riche en composés acides, en tête de colonne,
  - une conduite d'évacuation d'une solution absorbante totalement régénérée vers la première colonne d'absorption, en fond de colonne,
  - une conduite d'évacuation d'une solution absorbante partiellement régénérée vers la deuxième colonne d'absorption.

La conduite d'introduction de la première solution enrichie en composés acides est de préférence positionnée à un niveau intermédiaire le long de la colonne de régénération, au-dessous de la conduite d'introduction de la deuxième solution enrichie en composés acides.

Avantageusement, la position de la conduite d'introduction de la première solution enrichie en composés acides est déterminée en tenant compte simultanément du taux de charge et de la température de ladite solution enrichie en composés acides entrant dans la colonne de façon à minimiser la consommation de chaleur au rebouilleur de la colonne de régénération.

Avantageusement, la conduite d'évacuation de la solution absorbante partiellement régénérée est positionnée à une hauteur donnée de la colonne de régénération au-dessus de la conduite d'évacuation d'une solution absorbante totalement régénérée.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

**Brève description des figures**

Les figures 1 et 2 sont des schémas de principe d'une installation mettant en oeuvre un procédé de production d'hydrogène par reformage d'une charge hydrocarbonée gazeuse intégrant une unité de captage de $CO_2$ selon deux configurations connues.
La figure 3 est un schéma de principe illustrant une mise en oeuvre du procédé selon l'invention dans une installation de production d'hydrogène par reformage d'une charge hydrocarbonée gazeuse.
La figure 4 est un schéma de illustrant une mise en oeuvre du procédé de désacidification selon l'invention.
La figure 5 est un schéma de principe illustrant une mise en oeuvre du procédé selon l'invention pour traiter deux gaz riches en $H_2S$ à partir de deux charges hydrocarbonées différentes dans deux unités d'hydrotraitement distinctes.

Sur les figures, les mêmes références désignent des éléments identiques ou analogues.

**Description de l'invention**

La présente invention propose d'éliminer les composés acides contenus dans deux effluents gazeux d'origine différente en mettant en oeuvre un seule solution absorbante à base d'amines, une colonne d'absorption pour chacun des deux effluents gazeux à désacidifier et un seul régénérateur.

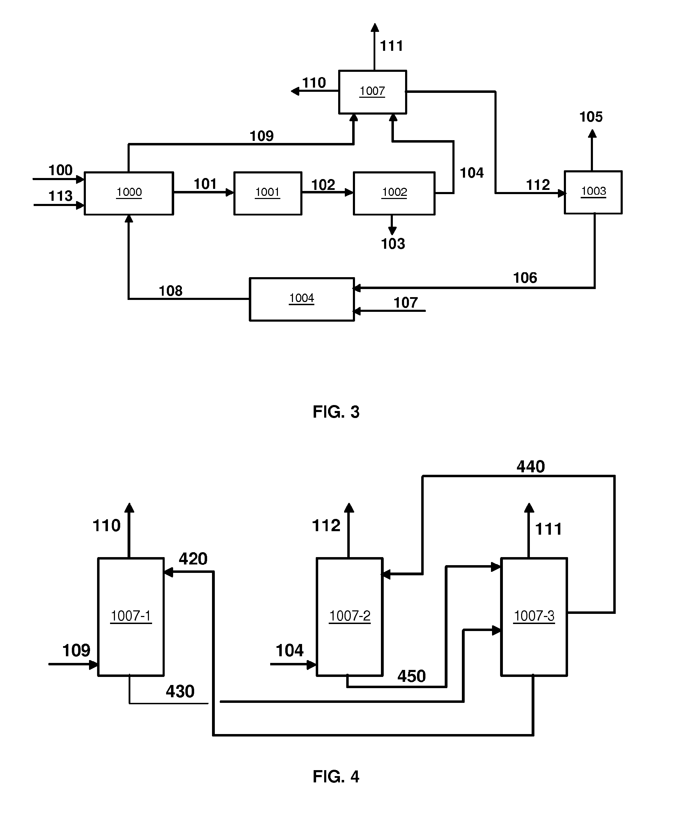

La figure 3 illustre le procédé selon l'invention, mis en oeuvre dans un procédé de production d'hydrogène par reformage à la vapeur d'une charge hydrocarbonée gazeuse telle que le gaz naturel ou le naphta.

Le procédé de production d'hydrogène, et l'installation le mettant en oeuvre, sont similaires à ceux décrits en relation avec les figures 1 et 2, à l'exception de l'intégration du captage de $CO_2$. Ainsi, seuls quelques compléments concernant les flux gazeux mis en jeu lors de la production d'hydrogène et une description relative au captage de $CO_2$ selon l'invention sont donnés ci-après.

La charge hydrocarbonée 100 est une charge gazeuse. Les charges hydrocarbonées gazeuses selon l'invention comprennent les charges hydrocarbonées sous forme de gaz, les charges liquides après vaporisation, et les hydrocarbures volatils de charges solides.

De préférence, la charge 100 est du gaz naturel ou du naphta. Le gaz naturel est constitué majoritairement d'hydrocarbures gazeux, mais peut contenir plusieurs des composés acides suivants : le $CO_2$, l'$H_2S$, des mercaptans, du COS, du $CS_2$. La teneur de ces composés acides est très variable et peut aller jusqu'à 70 % en volume pour le $CO_2$ et 40 % en volume pour l'$H_2S$. Une désulfuration de la charge peut être faite en amont de l'unité de reformage 1000. Dans ce cas, les gaz acides à retirer sont essentiellement du $CO_2$. La température du gaz naturel peut être comprise entre 20°C et 100°C. La pression du gaz naturel peut être comprise entre 10 et 120 bar.

La charge 100 présente de préférence un ratio molaire vapeur sur carbone (S/C) minimum afin d'éviter la formation de coke sur le catalyseur et la corrosion par "metal dusting". Selon les charges, ce rapport varie généralement entre 2,5 et 3,5.

Les fumées de combustion 109 sont produites par la combustion d'un combustible 107 tels que des hydrocarbures, par exemple du gaz naturel ou un gaz/liquide de raffinerie, un biogaz etc, et de préférence également par la combustion de la purge 106. Ces fumées ont généralement une température comprise entre 900 °C et 1400 °C, une pression comprise entre 1 et 6 bar absolu et peuvent comporter entre 50 et 80% en volume d'azote, entre 5 % et 40 % en volume de $CO_2$, entre 0,5 % et 17 % en volume d'oxygène, et quelques impuretés comme des SOx et des NOx.

L'effluent 104 est un mélange gazeux sec riche en hydrogène, dont la teneur est typiquement comprise entre 70 et 90 % molaire, comprenant en outre du $CO_2$, à une teneur comprise entre 15% et 30% molaire, formé principalement lors de la réaction de conversion du CO dans l'unité 1001, ainsi que du $CH_4$ résiduel, compris entre 2% et 7%, et du CO résiduel, à une teneur de moins de 5%, et éventuellement un résidu d'eau non condensée lors de l'étape de refroidissement et de condensation dans l'unité 1002, et d'autres composés présents dans la charge 100 initiale. La pression de l'effluent 104 est comprise entre 15 et 40 bar, de préférence entre 20 et 30 bar.

Selon l'invention, on procède au captage de $CO_2$ des effluents gazeux en mettant en oeuvre une unité de captage de $CO_2$ 1007 recevant les fumées de combustion 109 et l'effluent 104 riche en hydrogène. Chacun de ces deux effluents gazeux 109 et 104 est traité dans une colonne d'absorption distincte (non représentées dans la figure 3) par mise en contact avec une solution absorbante aqueuse à base d'amines, afin d'éliminer le $CO_2$ contenu dans chacun des deux effluents. De chacun des absorbeurs sort un gaz appauvri en $CO_2$: des fumées appauvries en $CO_2$ 110 qui peuvent être ensuite envoyées vers une cheminée pour être rejetée dans l'atmosphère, et un flux riche en $H_2$ et appauvri en $CO_2$ 112, qui est envoyé dans l'unité de purification 1003. Une seule solution absorbante est utilisée pour traiter les deux gaz 109 et 104, ladite solution circulant entre chacun des absorbeurs et un unique régénérateur. Au sein du régénérateur (non représenté dans la figure 3), la solution absorbante chargée en composés acides suite à sa mise en contact avec les effluents 109 et 104, est régénérée thermiquement afin d'être réutilisée dans les deux absorbeurs, et le $CO_2$ est libéré pour former un flux gazeux comprenant essentiellement du $CO_2$ 111.

Tout le $CO_2$ généré lors du procédé de production d'hydrogène peut ainsi être potentiellement capté par le procédé selon l'invention tout en minimisant les coûts d'investissement, avec l'emploi d'un régénérateur unique et d'une seule solution absorbante employée dans des conditions permettant un captage optimal du $CO_2$, contrairement aux solutions classiquement connues.

La figure 4 donne plus de détails sur la mise en oeuvre du procédé d'élimination de composés acides selon l'invention, avec une représentation schématique du circuit de la solution absorbante, des deux colonnes d'absorption 1007-1 et 1007-2 et de la colonne de régénération 1007-3 utilisés.

Il peut être fait référence à l'application captage de $CO_2$ lors de la production d'hydrogène pour décrire le procédé en référence à la figure 4, étant entendu que la présente invention peut être mise en oeuvre plus généralement pour traiter deux effluents gazeux 104 et 109 d'origine différente, sans se limiter au captage de $CO_2$.

L'installation de désacidification comprend une première colonne d'absorption 1007-1 munie de moyens de mise en contact entre gaz et liquide, par exemple un garnissage vrac, un garnissage structuré ou des plateaux. Le premier effluent gazeux à traiter 109, par exemple les fumées de combustion 109 de la figure 3, est acheminé par une conduite débouchant au fond de la colonne 1007-1. Une conduite en tête de la colonne 1007-1 permet l'introduction de la solution absorbante 420. Une conduite au sommet de la colonne permet au gaz traité (désacidifié) 110, c'est-à-dire les fumées de combustion appauvries en $CO_2$, d'être évacuées, et une autre conduite positionnée en fond de colonne permet d'envoyer la solution absorbante enrichie en composés acides 430 vers une colonne de régénération 1007-3. On définit comme taux de charge de la solution en composés acides la quantité de composés acides (moles), par exemple la quantité de $CO_2$ (moles), rapportée à la quantité d'amines (en moles). en $CO_2$ la quantité de $CO_2$ (en moles) rapportée à la quantité d'amine (en moles). Par exemple, dans le cas où la solution absorbante utilisée est une solution aqueuse de MEA à 30 % poids, la solution 430 est chargée en $CO_2$ avec un taux de charge compris entre 0,30 et 0,53 mol $CO_2$/mol MEA, et de façon préférée entre 0,40 et 0,52 mol $CO_2$/mol MEA.

L'installation de désacidification comprend également une deuxième colonne d'absorption 1007-2, équipée de la même manière que la première colonne d'absorption 1007-1, comprenant une conduite en partie basse de la colonne par laquelle est envoyé le deuxième effluent gazeux à traiter 104, par exemple le mélange sec riche en hydrogène 104 de la figure 3. Une conduite en tête de colonne 1007-2 permet l'introduction d'un autre flux 440 de la solution absorbante pour sa mise en contact avec le gaz 104. Une conduite au sommet de la colonne 1007-2 permet l'évacuation du gaz traité (désacidifié) 112, par exemple le mélange riche en $H_2$ et appauvri en $CO_2$ 112 de la figure 3, et une conduite en fond de colonne 1007-2 permet d'évacuer et envoyer une deuxième solution absorbante enrichie en composés acides 450 vers la colonne de régénération 1007-3. Par exemple, dans le cas où la solution absorbante utilisée est une solution aqueuse de MEA à 30 % poids, la solution 450 est chargée en $CO_2$ avec un taux de charge compris entre 0,35 et 0,60 mol $CO_2$/mol MEA, et de façon préférée entre 0,45 et 0,60 mol $CO_2$/mol MEA.

De préférence, la solution absorbante enrichie en composés acides 450 sortant du second absorbeur 1007-2 et la solution absorbante enrichie en composés acides 430 sortant du premier absorbeur 1007-1 ont une différence dans leur taux de charge en composés acides comprise entre 5 % et 30 %.

La colonne de régénération 1007-3 est aussi équipée d'internes de mise en contact entre gaz et liquide, par exemple des plateaux, des garnissages vrac ou structurés. Le fond de la colonne 1007-3 est équipé d'un rebouilleur (non représenté) qui apporte la chaleur nécessaire à la régénération en vaporisant une fraction de la solution absorbante. Le placement des conduites d'alimentation permettant l'introduction des solutions absorbantes dans la colonne de régénération est avantageusement effectué de façon à ce que le profil de température et de taux de charge dans la colonne de régénération soit le plus monotone possible par rapport à l'évolution naturelle de la température et du taux de charge. Ainsi le taux de charge est plus élevé en tête de colonne de régénération, et moins élevé en bas de ladite colonne. La température est moins élevée en tête de colonne de régénération, et plus élevée en bas de ladite colonne. Le placement des alimentations de la colonne 1007-3 tient compte simultanément du taux de charge et de la température de la solution absorbante chargée entrant dans la colonne, de façon à minimiser la consommation de chaleur au rebouilleur de la colonne de régénération. Le résultat final est issu d'un calcul itératif. Parmi les deux solutions absorbantes enrichies en composés acides 430 et 450, celle ayant le taux de charge en composés acides le plus important est introduite à une hauteur plus élevée dans la colonne de régénération 1007-3 que celle ayant le taux de charge en composés acides le plus faible. La conduite acheminant la première solution absorbante enrichie en composés acides 430 en provenance du premier absorbeur 1007-1 débouche dans une partie intermédiaire de la colonne de régénération, à une hauteur donnée choisie de manière à ce qu'une majeure partie des composés acides contenus dans la solution puisse être libérée par détente avec une consommation minimale d'énergie, comme décrit plus haut. La conduite permettant l'introduction de la solution absorbante enrichie en composés acides 450 issue de la deuxième colonne d'absorption 1007-2, dans le cas où son taux charge en composés acides est plus important que celui de la solution 430, débouche en haut de la colonne de régénération 1007-3, au-dessus de la conduite d'introduction de la première solution enrichie en composés acides 430, pour une régénération plus poussée de ce flux plus riche en composés acides que la solution 430. Une conduite au sommet de la colonne 1007-3 permet d'évacuer le gaz enrichi en composés acides libérés lors de la régénération 111. Une conduite disposée au fond de la colonne 1007-3 permet d'évacuer une solution absorbante totalement régénérée pour former le premier flux de solution absorbante 420 envoyé vers la première colonne d'absorption 1007-1. Une conduite positionnée à un niveau intermédiaire le long de la colonne 1007-3, au-dessus de la conduite d'évacuation de la solution totalement régénérée 420, permet d'extraire une solution absorbante partiellement régénérée, qui vient composer le deuxième flux de solution absorbante 440 envoyée dans le deuxième absorbeur 1007-2.

Des échangeurs de chaleur (non représentés) sont de préférence placés sur le circuit absorbeur/régénérateur permettant de récupérer la chaleur de la solution absorbante régénérée ou partiellement régénérée issue de la colonne de régénération 1007-3 pour chauffer les solutions absorbantes enrichies en composés acides 430 ou 450 sortant des colonnes d'absorption. Des pompes et des vannes, non représentées, peuvent également être placées sur le circuit de solution absorbante, afin d'ajuster les pressions des fluides aux conditions opératoires souhaitées et de faciliter leur acheminement d'une colonne à une autre.

L'utilisation d'une unique colonne de régénération pour désacidifier deux effluents gazeux d'origine différente permet un gain significatif sur les coûts d'investissement.

L'absorption réalisée dans les colonnes d'absorption 1007-1 et 1007-2 consiste à mettre en contact l'effluent gazeux arrivant par la conduite en bas de colonne avec le flux de solution absorbante arrivant par la conduite en haut de colonne. Lors du contact, les amines de la solution absorbante réagissent avec les composés acides contenus dans l'effluent de manière à obtenir un effluent gazeux appauvri en composés acides qui est évacué par la conduite en tête de la colonne d'absorption et une solution absorbante enrichie en composés acides évacuée par la conduite située en fond de la colonne d'absorption pour être régénérée.

La première étape d'absorption réalisée dans la première colonne d'absorption 1007-1 est réalisée à une pression P1, qui peut être comprise entre 1 bar et 190 bar, de préférence comprise entre 1 bar et 6 bar, plus préférentiellement entre 1 et 3 bar, dans le cas d'une fumée de combustion, et de préférence entre 40 bar et 190 bar pour un gaz de recycle d'une unité d'hydrotraitement d'une charge hydrocarbonée. La pression P1 correspond de préférence à la pression de l'effluent 109 à traiter. La température dans la colonne 1007-1 peut être comprise entre 20°C et 90°C, préférentiellement comprise entre 30°C et 80°C. Les pressions données dans la présente description sont exprimées en unité absolue (bar absolu), à moins qu'il n'en soit spécifié autrement.

La deuxième étape d'absorption réalisée dans la deuxième colonne d'absorption 1007-2 est réalisée à une pression P2 supérieure à la pression P1, supérieure d'au moins 5 bar à la pression P1, de préférence supérieure d'au moins 10 bar à la pression P1, et de manière encore plus préférée supérieure d'au moins 20 bar à la pression P1. La pression P2 peut être comprise entre 10 bar et 200 bar, de préférence entre 15 bar et 200 bar, et plus préférentiellement entre 15 bar et 40 bar dans le cas de l'effluent gazeux 104 riche en $H_2$ de la figure 3, et de préférence entre 45 bar et 200 bar pour un gaz de recycle d'une unité d'hydrotraitement d'une charge hydrocarbonée. La pression P2 correspond de préférence à la pression de l'effluent 104 à traiter. La température dans la colonne 1007-2 peut être comprise entre 20°C et 90°C, préférentiellement comprise entre 30°C et 80°C. L'absorption réalisée à une pression P2 élevée, notamment à des pressions partielles en composés acides dans l'effluent à traiter élevées, permet une absorption plus efficace par la solution absorbante. La solution absorbante enrichie en composé acides en fond de la deuxième colonne 1007-2 peut donc être très chargée en composés acides, notamment en comparaison à la solution absorbante 430 sortant en fond de la première colonne d'absorption 1007-1.

L'étape de régénération dans la colonne de régénération 1007-3 consiste notamment à chauffer et, éventuellement à détendre, les solutions absorbantes enrichies en composés acides provenant des deux colonnes d'absorption, afin de libérer les composés acides sous forme gazeuse.

La première solution absorbante enrichie en composés acides 430 sortant de la première colonne 1007-1 est introduite la colonne de régénération 1007-3, à une hauteur donnée de la colonne déterminée, par exemple au niveau d'un plateau donné, de manière à ce qu'une détente de la solution soit réalisée pour libérer au moins 50 % des composés acides contenus dans la solution. Selon l'invention, l'envoi de la solution 430 à une position intermédiaire le long de la colonne suffit à régénérer cette solution 430, et permet ainsi d'optimiser l'énergie à fournir pour la régénération globale. De préférence, avant son introduction dans la colonne de régénération, la solution 430 est préalablement réchauffée dans un échangeur de chaleur par le flux de solution totalement régénérée 420 en provenance de la colonne de régénération 1007-3.

La deuxième solution absorbante enrichie en composés acides 450 sortant de la deuxième colonne 1007-2 est introduite par une conduite au sommet de la colonne de régénération. Avant son introduction dans la colonne de régénération, la solution 450 peut être réchauffée dans un échangeur de chaleur dans lequel circule le flux 440 sortant de la colonne de régénération 1007-3.

Dans la colonne de régénération 1007-3, sous l'effet de la mise en contact des solutions absorbantes enrichies en composés acides avec la vapeur produite par le rebouilleur, les composés acides sont libérés sous forme gazeuse et évacués par une conduite située en tête de colonne 1007-3. Une solution absorbante totalement régénérée, c'est-à-dire presque totalement dépourvue de composés acides, est évacuée par une conduite en fond de colonne 1007-3, puis est recyclée dans la première colonne d'absorption 1007-3 pour former le premier flux de solution absorbante 420. La solution 420 est de préférence refroidie dans un échangeur de chaleur dans lequel circule la solution 430. Une solution absorbante partiellement régénérée 440 est extraite à un niveau intermédiaire le long de la colonne de régénération 1007-3, au-dessus de l'évacuation de la solution totalement régénérée 420, par exemple recueillie au niveau d'un plateau donné, pour être recyclée et former le deuxième flux de solution absorbante 440 introduit dans la deuxième colonne d'absorption 1007-2. La solution partiellement régénérée a un taux de charge en composés acides entre 5% et 30% plus élevé que la solution totalement régénérée 420. Une telle solution partiellement régénérée suffit à éliminer efficacement les composés acides du deuxième effluent gazeux 104 dans le deuxième absorbeur opérant à forte pression, tout en permettant d'économiser l'énergie nécessaire à la régénération globale de la solution absorbante.

Dans le cas où la solution absorbante utilisée est une solution aqueuse de MEA à 30 % poids, une solution partiellement régénérée 450 est par exemple une solution ayant un taux de charge en $CO_2$ compris entre 0,20 et 0,50 mol $CO_2$/mol MEA, et de préférence entre 0,25 et 0,40 mol $CO_2$/ mol MEA, et une solution totalement régénérée est par exemple une solution ayant un taux de charge en $CO_2$ compris entre 0,15 et 0,45 mol $CO_2$/mol MEA, et de préférence entre 0,20 et 0,30 mol $CO_2$/ mol MEA.

L'étape de régénération du procédé selon l'invention est réalisée par régénération thermique, éventuellement complétée par une ou plusieurs étapes de détente.

La régénération peut être effectuée à une pression dans la colonne 1007-3 comprise entre 1 bar et 5 bar, voire jusqu'à 10 bar et à une température dans la colonne 1007-3 comprise entre 100°C et 180°C, de préférence comprise entre 110°C et 170°C, plus préférentiellement entre 120°C et 140°C.

La solution absorbante selon l'invention est une solution aqueuse comprenant au moins une amine. Ladite amine en solution aqueuse présente la capacité à absorber au moins un composé acide de l'effluent gazeux à traiter. Des amines primaires, secondaire ou tertiaires, c'est-à-dire comportant au moins une fonction amine primaire, secondaire ou tertiaire, peuvent être employées.

De manière non exhaustive, les amines suivantes peuvent être utilisées pour la solution absorbante utilisée dans le procédé selon l'invention : monoéthanolamine (MEA), 2-amino-2-methyl-propanol (AMP), 1-amino-2-propanol, 2-amino-1-butanol, 1-(2-aminoethyl)-pyrrolidine, diethanolamine (DEA), 2 (ethylamino) ethanol, 2-méthylpipérazine, N-methyldiethanolamine (MDEA), 1-(dimethylamino)-2-propanol, la N,N,N',N'-Tétraméthylhexane-1,6-diamine (TMHDA), 1-amino-6-pyrodinyl-hexane, Pentamethyldipropylenetriamine, N,N,N',N'-Tetraethyldiethylenetriamine, Bis[2-(N,N-diméthylamino)-éthyl]éther. Ces amines peuvent être employées seules, ou en mélange.

La formulation de la solution sera déterminée de préférence selon le ou les composés acides à éliminer et les pressions partielles en composés acides des gaz à traiter. Il peut être avantageux de choisir une amine tertiaire ou secondaire encombrée pour effectuer une absorption sélective de l'$H_2S$, par exemple dans le traitement de gaz de recycle issus de procédé d'hydrotraitement.

Par solution aqueuse on entend une solution contenant au moins 10%, valeur incluse, en poids d'eau.

L'amine ou les amines peuvent être en concentration variable dans la solution absorbante, par exemple comprise entre 10 % et 90 % poids, de préférence entre 20 % et 60 % poids, encore plus préférentiellement entre 25 % et 60 % poids, et encore plus préférentiellement entre 30 % et 60 % poids, bornes incluses.

La solution absorbante peut contenir entre 10 % et 90 % poids d'eau, de préférence entre 25 % et 80 % poids d'eau, plus préférentiellement entre 30 % et 70 % poids d'eau, et encore plus préférentiellement entre 40 % et 70 % poids d'eau, bornes incluses.

La solution absorbante peut comprendre d'autres composés, par exemple un composé ou plusieurs composés activateurs permettant d'accélérer la cinétique d'absorption des composés acides, pouvant être un composé azoté comprenant une fonction amine primaire ou secondaire. Les amines tertiaires peuvent ainsi être mélangée avec une amine primaire ou secondaire, par exemple avec une ou plusieurs des amines suivantes : BenzylAmine, N-MethylBenzylAmine, N-EthylBenzylAmine, α-MethylBenzylAmine, α-EthylBenzylAmine, PhénéthylAmine, TetraHydroIsoQuinoline, IsoIndoline, ButylAmine, N-ButylPipérazine, MonoEthanolAmine, AminoEthylEthanolAmine, DiGlycolAmine, Pipérazine, N-(2-HydroxyEthyl)Pipérazine, N-(2-AminoEthyl)Pipérazine, N-MethylPipérazine, N-EthylPipérazine, N-Propyl-Pipérazine, 1,6-HexaneDiAmine, 1,1,9,9-TetraMéthylDiPropylèneTriamine, Morpholine, Pipéridine, 3-(MetylAmino)PropylAmine, N-MethylBenzylAmine.

La solution absorbante peut en outre comprendre un solvant physique comme le méthanol, le sulfolane, les polyéthylèneglycols qui peuvent être éthérifiés, les pyrrolydones ou dérivés comme par exemple la N-méthylpyrrolidone, la N-formyl morpholine, l'acétyl morpholine, le carbonate de propylène. Par exemple, la solution absorbante comporte entre 10% et 50% poids d'un solvant à caractère physique.

La solution absorbante peut en outre comprendre des composés inhibiteurs de dégradation des amines ou inhibiteurs de corrosion.

La présente invention ne se limite pas au captage de $CO_2$ dans les fumées et le gaz de synthèse ayant subi une conversion par WGS lors de la production d'hydrogène par reformage à la vapeur de gaz naturel.

Elle peut plus généralement s'appliquer au traitement d'effluents gazeux d'origine différente, notamment des effluents gazeux ayant des pressions différentes. Pour tirer au maximum parti de avantages procurés par le procédé selon l'invention, les effluents gazeux à traiter présente une différence de pression significative, par exemple de l'ordre d'au moins 5 bar, de préférence d'au moins 10 bar, de manière plus préférée d'au moins 20 bar.

Ainsi, le procédé selon l'invention peut avantageusement s'appliquer à la désulfuration des gaz riches en $H_2S$ formés lors de procédés d'hydrotraitement de charges hydrocarbonées de nature différentes, dans des conditions de pression différentes.

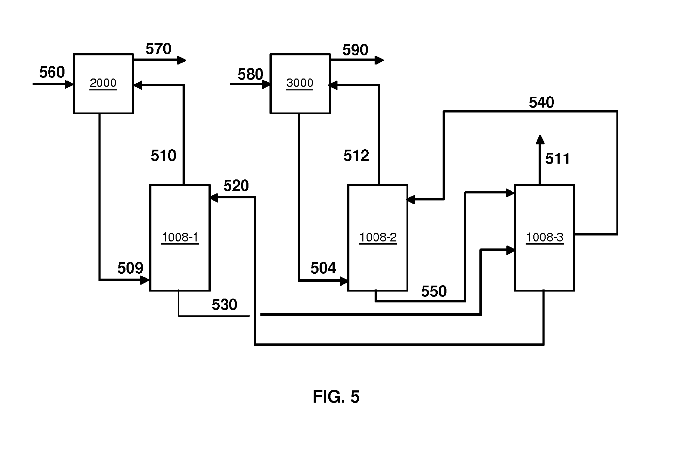

La figure 5 illustre schématiquement une telle application. L'installation de désacidification selon l'invention comporte les mêmes dispositifs décrits en relation avec la figure 4.

Dans ce mode de réalisation, les effluents gazeux à désacidifier 509 et 504 sont des gaz de recycle générés lors d'un procédé d'hydrotraitement de deux charges hydrocarbonées différentes, par exemple une essence et un gazole de distillation nécessitant chacun un hydrotraitement séparé en raison par exemple des composés soufrés qui varient selon les charges. On dit alors de ces composés soufrés qu'ils sont plus ou moins réfractaires. Plus un composé soufré est réfractaire, plus la pression opératoire de l'hydrodésulfuration sera élevée.

L'hydrotraitement d'une charge hydrocarbonée tel qu'un gazole dans le domaine du raffinage du pétrole est un procédé bien connu de l'homme du métier. Un tel procédé est par exemple décrit dans le brevet US4990242. L'hydrotraitement vise à désulfurer les gazoles. Il consiste à faire réagir une charge hydrocarbonée mélangée avec un gaz riche en hydrogène dans un réacteur à forte température, le mélange étant chauffé par des échangeurs de chaleur et un four à la température de réaction de l'ordre de 340°C à 370°C avant son introduction dans le réacteur. La charge est introduite dans le réacteur à l'état de vapeur s'il s'agit d'une coupe légère, ou en mélange liquide/vapeur s'il s'agit d'une coupe lourde. L'exothermicité des réactions provoque une élévation de température, qui peut être contrôlée, par exemple en mettant en oeuvre un refroidissement rapide ("quench") avec un fluide froid pour refroidir le mélange dans le réacteur. A la sortie du réacteur le mélange est refroidi et séparé, et on obtient un gaz riche en $H_2S$, des produits légers résultant de la décomposition des impuretés, et un produit hydroraffiné de même volatilité que la charge mais aux caractéristiques améliorées. Lors de l'étape de séparation, plusieurs dispositifs sont généralement mis en oeuvre dont un ballon séparateur haute pression qui permet de recycler un gaz riche en hydrogène grâce à un compresseur de recyclage. Ce gaz de recycle contient de l'$H_2S$ qui peut être éliminé par un lavage avec une solution absorbante aux amines. Une purge du gaz haute pression peut également être prévue pour maintenir une pureté suffisante en hydrogène du gaz recyclé. C'est à ce niveau qu'intervient le procédé de désacidification selon l'invention. En général, la section de séparation comprend également un ballon séparateur basse pression et un stripper à vapeur d'eau de gazole. Le ballon séparateur basse pression permet de séparer les phases liquide et vapeur obtenues par détente du liquide du ballon haute pression. Le gaz contient principalement de l'hydrogène, des hydrocarbures légers et une grande partie de l'hydrogène sulfuré qui s'est formé dans la réaction. La stripper a pour but d'éliminer les hydrocarbures légers et l'$H_2S$ résiduel de la coupe traitée. Le gazole est soutiré en fond de colonne avec un contrôle de l'opération avec le point d'éclair du gazole. L'$H_2S$ résiduel est mélangé avec le gaz riche en $H_2S$ sortant du ballon séparateur basse pression pour former le gaz riche en $H_2S$ sortant de l'unité d'hydrotraitement.

Le procédé selon l'invention permet d'éliminer l'$H_2S$ de gaz de recycle 509 et 504 provenant de deux unités d'hydrotraitement distinctes 2000 et 3000. Chaque unité d'hydrotraitement traite une charge initiale hydrocarbonée différente 560 et 580, à des pressions différentes, liées par exemple à la nature de la charge, à l'origine géographique du pétrole brut et à la coupe de distillation (essence/kérosène/gazole). De la première unité d'hydrotraitement 2000 sort un produit hydroraffiné 570 et un gaz de recycle 509 pour lequel on souhaite éliminer l'$H_2S$. La gaz de recycle a une pression par exemple comprise entre 40 bar et 190 bar. Il en est de même pour la deuxième unité d'hydrotraitement 300 de laquelle sort un produit hydroraffiné 590 et un gaz de recycle 504 contenant de l'$H_2S$ à éliminer à une pression par exemple comprise entre 45 bar et 200 bar. Les gaz de recycle sont riches en hydrogène, typiquement entre 60 et 95% molaire, et peuvent contenir entre 2 % et 20 % de méthane, entre 1 % et 10 % d'éthane, moins de 5 % d'hydrocarbures à plus de trois atomes de carbone, des traces d'eau, moins de 5 % d'eau, et entre 0,1 % et 4 % d'$H_2S$, préférentiellement entre 0,5 % et 1, 5 % d'$H_2S$. Les absorbeurs 1008-1 et 1008-2 permettent d'éliminer l'$H_2S$ respectivement du gaz de recycle 509 et du gaz de recycle 504, et le régénérateur 1008-3 permet de régénérer la solution absorbante avec la production d'une solution partiellement régénérée et d'une solution totalement régénérée, de la même manière que précédemment décrit pour la mise en oeuvre du procédé illustré à la figure 4. Les solutions absorbantes enrichies en $H_2S$ 530 et 550 sont envoyés au régénérateur 1008-3, la solution partiellement régénérée 540 est recyclée dans le deuxième absorbeur 1008-2, et la solution totalement régénérée 520 est recyclée dans le premier absorbeur 1008-1.

La pression P2 dans le deuxième absorbeur 1008-2 est supérieure à la pression P1 du premier absorbeur 1008-1, d'au moins 5 bar, de préférence d'au moins 10 bar, de manière plus préférée d'au moins 20 bar, voire d'au moins 30 ou 40 bar.

La pression P1 est par exemple comprise entre 1 et 190 bar, de préférence entre 20 bar et 190 bar, plus préférentiellement entre 40 bar et 190 bar, encore plus préférentiellement entre 40 bar et 150 bar, et encore plus préférentiellement entre 40 bar et 100 bar. La pression P1 correspond de préférence à la pression de l'effluent 509 à traiter. La pression P2 est par exemple comprise entre 10 bar et 200 bar, de préférence entre 45 bar et 200 bar, plus préférentiellement entre 50 bar et 200 bar, encore plus préférentiellement entre 50 bar et 180 bar, et encore plus préférentiellement entre 80 et 150 bar. La pression P2 correspond de préférence à la pression de l'effluent 504 à traiter. Par exemple, le gaz de recycle 509 est traité à une pression P1 de 80 bar dans le premier absorbeur 1008-1, et le gaz de recycle 504 est traité à une pression P2 de 120 bar dans le deuxième absorbeur.

Tout moyen adéquat de mise sous pression et détente (ex: vannes, pompes, turbopompes) des fluides circulants entre les absorbeurs et le régénérateur peut être prévu afin d'atteindre les conditions opératoires requises dans les différentes colonnes.

Le procédé selon l'invention ne se limite pas à la désacidification de deux effluents gazeux d'origine différente, et pourrait être mis en oeuvre pour traiter plus de deux effluents gazeux. Par exemple, un troisième absorbeur peut être mis en oeuvre pour recevoir un troisième effluent gazeux duquel on souhaite retirer un ou plusieurs des composés acides, par mise en contact avec un troisième flux de la solution absorbante. Selon les conditions opératoires de l'absorbeur, notamment la pression de fonctionnement, le flux de solution absorbante introduit peut par exemple être une fraction de la solution totalement régénérée, ou une fraction de la solution partiellement régénérée, ou encore on peut avoir deux niveaux de soutirages intermédiaires au niveau de la colonne de régénération, qui offre alors trois qualité de solution régénérée, une dédiée à chacun des trois absorbeurs.

**Exemples**

L'exemple porte sur le procédé de désacidification selon la figure 3 et la figure 4. Les compositions, débits, température et pression des effluents gazeux 104 et 109 nécessitant une désacidification sont données dans le tableau 1 suivant.

**Tableau 1**

|  | Effluent 109 (gaz de combustion) | Effluent 104 (Syngaz) |
|---|---|---|
| Pression (bar a) | 1,02 | 26,7 |
| Température (°C) | 172,6 | 76 |
| Débit (kmol/h) | 13640 | 20465 |
| Fraction vapeur (%) | 100 | 100 |
| Fraction molaire (%) |  |  |
| Methane | - | 4,3 |
| Hydrogène | - | 74,3 |
| CO | - | 0,8 |
| $CO_2$ | 14,2 | 18,8 |
| O2 | 6,2 | 0 |
| N2 | 65,5 | 0,2 |
| H2O | 13,3 | 1,6 |
| Autres constituants organiques | - | > ppm molaire |
| Ar | 0,8 |  |

Selon les figures 1 et 2 représentant l'art antérieur, les effluents 104 et 109 peuvent être traités par deux unités distinctes de traitement aux amines. Ces unités de traitement doivent cependant respecter un taux d'élimination du $CO_2$ différents sur chacun de ces effluents gazeux. Pour le gaz 104, représentant le gaz de synthèse (ou syngaz), le taux d'élimination du $CO_2$ doit être d'au moins 98,5 %. Pour l'effluent 109, représentant le gaz de combustion, le taux d'élimination du $CO_2$ doit être d'au moins 90 %.

Par exemple, les effluents 104 et 109 sont traités avec une solution absorbante constituée d'une solution aqueuse de monoéthanolamine (MEA) concentrée à 30 % poids. Chacun des gaz 104 et 109 est traité dans une colonne d'absorption et mis en contact à contre-courant avec une solution d'amine ayant un taux de charge en $CO_2$ spécifique, c'est-à-dire contenant une certaine quantité de $CO_2$. On définit comme taux de charge en $CO_2$ la quantité de $CO_2$ (en moles) rapportée à la quantité d'amine (en mole). Dans le cas présent, les unités de traitement à la MEA utilisent une absorbante en entrée d'absorbeur à 0,24 mol $CO_2$/mol MEA pour le traitement de l'effluent 109 et à 0,28 mol $CO_2$/mol MEA pour le traitement de l'effluent 104. La consommation de chaleur associée à la régénération de l'amine est quantifiée en Giga Joules de chaleur par tonnes de $CO_2$ enlevée (GJ/t$CO_2$).

Le tableau 2 suivant présente les conditions opératoires des deux procédés mettant en oeuvre la MEA à 30 % poids, ainsi que l'investissement en coût installé du régénérateur de chaque unité selon l'art antérieur. Pour l'unité de traitement de l'effluent 104, l'investissement du régénérateur est indiqué sur une base de référence de 100. Pour l'unité de traitement de l'effluent 109, l'investissement du régénérateur est de 80.

**Tableau 2**

|  | Effluent 109 (gaz de combustion) | Effluent 104 (Syngaz) |
|---|---|---|
| **Absorbeur** |  |  |
| Taux d'enlèvement du $CO_2$(%) | 90,0 | 98,5 |
| Débit de $CO_2$ enlevé (t/h) | 76,9 | 49,1 |
| Pression absorbeur (bar a) | 1,02 | 26,7 |

(suite)

|  | Effluent 109 (gaz de combustion) | Effluent 104 (Syngaz) |
|---|---|---|
| **Absorbeur** | | |
| Débit amine entrée absorbeur (kmol/h) | 57845 | 114496 |
| Taux de charge en $CO_2$ du solvant en entrée de l'absorbeur (mol $CO_2$/mol MEA) | 0,24 | 0,28 |
| Taux de charge en $CO_2$ du solvant en sortie de l'absorbeur (mol $CO_2$/mol MEA) | 0,51 | 0,58 |
| **Régénérateur** | | |
| Pression (bar a) | 1,8 | 1,8 |
| Température en fond (°C) | 120 | 120 |
| Consommation énergétique (GJ/t $CO_2$ | 3,5 | 3,4 |
| Base investissement régénérateur | 80 | 100 |

Les deux unités d'absorption décrites ci-dessus utilisent le même solvant (MEA 30% poids). Selon l'invention, on utilise les même données relatives à l'absorption des effluents 104 et 109, et on réalise la régénération au sein d'un même régénérateur, avec des conditions de fonctionnement du régénérateur en ce qui concerne la température et la pression également identiques.

Sur les figures 3 et 4, la mutualisation du régénérateur entre les deux unités permet de traiter les effluents 104 et 109 au sein de la même unité de traitement 1007 représentée sur la figure 3. La figure 4 représente l'organisation interne de l'unité 1007. Les absorbeurs 1007-1 et 1007-2 ont des conditions de fonctionnement et des dimensions identiques à celles des absorbeurs des procédés de l'art antérieur décrits plus haut. Le régénérateur mutualisé 1007-3 régénère les solutions absorbantes pour les deux absorbeurs 1007-1et 1007-2. Dans la figure 4, les flux 420 et 440 proviennent du soutirage à des hauteurs différentes du régénérateur. Le régénérateur 1007-3 présente des dimensions plus importantes du fait du débit global d'amine plus important à traiter en comparaison avec la configuration de l'art antérieur mettant en oeuvre des unités de traitement distinctes ayant chacune un régénérateur. Cependant, les économies d'échelle sur l'investissement total de la section mutualisée permet obtenir une investissement pour le régénérateur de 160, réduisant de 12% l'investissement total sur le régénérateur de l'unité 1007 par rapport à l'art antérieur.

Les tableaux 3 et 4 suivants présentent les conditions de fonctionnement des absorbeurs 1007-1 et 1007-2, et du régénérateur 1007-3.

**Tableau 3**

| Equipement | 1007-1 | 1007-2 |
|---|---|---|
| Taux d'enlèvement du $CO_2$ (%) | 90,0 | 98,5 |
| Débit de $CO_2$ enlevé (t/h) | 76,9 | 49,1 |
| Pression absorbeur (bar a) | 1,02 | 26,7 |
| Température fond absorbeur (°C) | 55 | 50 |
| Débit amine entrée absorbeur (kmol/h) | 57845 | 114496 |
| Taux de charge en $CO_2$ du solvant en entrée de l'absorbeur (mol $CO_2$/mol MEA) | 0,24 | 0,28 |
| Taux de charge en $CO_2$ du solvant en sortie de l'absorbeur (mol $CO_2$/mol MEA) | 0,51 | 0,58 |

**Tableau 4**

| Equipement | 1007-3 |
|---|---|
| Débit de $CO_2$ enlevé (t/h) | 126,0 |
| Pression régénérateur (bar a) | 1,8 |

(suite)

| Equipement | 1007-3 |
|---|---|
| Température fond régénérateur (°C) | 120 |
| Débit amine du flux 450 (kmol/h) | 114496 |
| Taux de charge en $CO_2$ du flux 450 (mol $CO_2$/mol MEA) | 0,58 |
| Débit amine du flux 430 (kmol/h) | 57845 |
| Taux de charge en $CO_2$ du flux 430 (mol $CO_2$/mol MEA) | 0,51 |
| Débit amine de la solution partiellement régénérée (flux 440) (kmol/h) | 114496 |
| Débit amine de la solution totalement régénérée (flux 420) (kmol/h) | 57845 |
| Taux de charge amine de la solution partiellement régénérée 440 (mol $CO_2$/mol MEA) | 0,28 |
| Taux de charge amine de la solution totalement régénérée 420 (mol $CO_2$/mol MEA) | 0,24 |
| Base investissement régénérateur | 160 |

## Revendications

1. Procédé d'élimination de composés acides contenus dans un effluent gazeux, dans lequel:

    - on met en contact, dans une première colonne d'absorption (1007-1, 1008-1) opérant à une première pression P1, un premier effluent gazeux (109,509) contenant des composés acides avec un premier flux d'une solution absorbante aqueuse comprenant au moins une amine (420,520), pour produire un premier effluent gazeux appauvri en composés acides (110,510) et une première solution enrichie en composés acides (430,530),
    - on met en contact, dans une deuxième colonne d'absorption (1007-2, 1008-2) opérant à une deuxième pression P2 supérieure d'au moins 5 bar à la première pression P1, un deuxième effluent gazeux (104,504) contenant des composés acides avec un deuxième flux de la solution absorbante (440,540), pour produire un deuxième effluent gazeux appauvri en composés acides (112,512) et une deuxième solution enrichie en composés acides (450,550),
    - on régénère les première et deuxième solutions enrichies en composé acides (430,450,530,550) dans une colonne de régénération (1007-3, 1008-3) pour produire un gaz riche en composés acides (111,511), une solution partiellement régénérée (440,540) et une solution totalement régénérée (420, 520), et
    - on envoie ladite solution partiellement régénérée (440,540) dans la deuxième colonne d'absorption (1007-2,1008-2) pour former le deuxième flux de solution absorbante et on envoie la solution totalement régénérée (420,520) dans la première colonne d'absorption (1007-1,1008-1) pour former le premier flux de première solution absorbante.

2. Procédé selon la revendication 1, dans lequel la première pression P1 dans la première colonne d'absorption (1007-1,1008-1) est comprise entre 1 bar et 190 bar et la deuxième pression P2 dans la deuxième colonne d'absorption (1007-2,1008-2) est comprise entre 10 bar et 200 bar.

3. Procédé selon l'une des revendications 1 et 2, dans lequel la deuxième pression P2 est supérieure d'au moins 10 bar à la première pression P1, la première pression P1 est comprise entre 1 bar et 6 bar, et la deuxième pression P2 est comprise entre 15 bar et 40 bar.

4. Procédé selon l'une des revendications précédentes, dans lequel la première solution enrichie en composés acides (430,530) et la deuxième solution enrichie en composés acides (450,550) ont une différence de taux de charge en composés acides comprise entre 5 % et 30 %.

5. Procédé selon l'une des revendications précédentes, dans lequel on introduit la première solution enrichie en composés acides (430,530) à un niveau intermédiaire le long de la colonne de régénération (1007-3, 1008-3), de manière à ce qu'au moins 50 % des composés acides contenus dans ladite solution soient libérés sous forme de gaz dans la colonne de régénération.

**6.** Procédé selon l'une des revendications précédentes, dans lequel on recueille la solution partiellement régénérée (440,540) à une hauteur donnée de la colonne de régénération supérieure à la hauteur d'évacuation de la solution totalement régénérée (420,520).

**7.** Procédé selon l'une des revendications précédentes pour le captage de $CO_2$ dans un procédé de production d'hydrogène par reformage à la vapeur d'une charge hydrocarbonée gazeuse (100),
dans lequel le premier effluent gazeux (109) est une fumée de combustion issue d'une étape de combustion dans le procédé de production d'hydrogène, et le deuxième effluent gazeux (104) est un mélange gazeux sec riche en hydrogène et comprenant du $CO_2$, ledit mélange étant obtenu au cours du procédé de production d'hydrogène après une étape de conversion à l'eau du CO contenu dans les effluents issus du reformage et après une étape de refroidissement et condensation.

**8.** Procédé selon l'une des revendications 1 à 6 pour le captage de l'$H_2S$ dans un procédé d'hydrotraitement d'une charge hydrocarbonée,
dans lequel le premier effluent gazeux (509) et le deuxième effluent gazeux (504) à traiter sont des gaz de recycle produits respectivement dans une première unité d'hydrotraitement (2000) et une deuxième unité d'hydrotraitement (3000).

**9.** Procédé selon la revendication 8, dans lequel la première pression P1 est comprise entre 20 bar et 190 bar et la deuxième pression P2 est comprise entre 45 bar et 200 bar.

**10.** Installation d'élimination de composés acides contenus dans un effluent gazeux, pour la mise en oeuvre du procédé selon l'une des revendications 1 à 9 comprenant:

- une première colonne d'absorption (1007-1, 1008-1) et une deuxième colonne d'absorption (1007-2, 1008-2), comprenant chacune:

  o des moyens de mise en contact entre gaz et liquide;
  o une première conduite en fond de colonne d'introduction d'un effluent gazeux à traiter (109,104,509,504);
  o une deuxième conduite en tête de colonne d'introduction d'un flux de solution absorbante (420,440,520,540);
  o une troisième conduite en tête de colonne d'évacuation d'un effluent gazeux traité appauvri en composés acides (110,112,510,512) et
  o une quatrième conduite en fond de colonne d'évacuation d'une solution absorbante enrichie en composés acides (430,450,530,550);

- une colonne de régénération (1007-3, 1008-3) comprenant :

  o des moyens de mise en contact entre gaz et liquide ;
  o un rebouilleur ;
  o une conduite d'introduction d'une première solution enrichie en composés acides (430,530) issue de la première colonne d'absorption (1007-1,1008-1),
  o une conduite d'introduction d'une deuxième solution enrichie en composés acides (450,550) issue de la deuxième colonne d'absorption (1007-2,1008-2), en haut de colonne,
  o une conduite d'évacuation d'un gaz riche en composés acides (111), en tête de colonne,
  o une conduite d'évacuation d'une solution absorbante totalement régénérée (420,520) vers la première colonne d'absorption (1007-1,1008-1), en fond de colonne,
  o une conduite d'évacuation d'une solution absorbante partiellement régénérée (440,540) vers la deuxième colonne d'absorption (1007-2,1008-2).

**11.** Installation selon la revendication 10, dans laquelle la conduite d'introduction de la première solution enrichie en composés acides (430,530) est positionnée à un niveau intermédiaire le long de la colonne de régénération (1007-3,1008-3) au-dessous de la conduite d'introduction de la deuxième solution enrichie en composés acides (450,550).

**12.** Installation selon la revendication 10, dans laquelle la position de la conduite d'introduction de la première solution enrichie en composés acides (430,530) est déterminée en tenant compte simultanément du taux de charge et de la température de ladite solution enrichie en composés acides (430,530) entrant dans la colonne de façon à minimiser

**14**

la consommation de chaleur au rebouilleur de la colonne de régénération (1007-3,1008-3).

13. Installation selon l'une des revendications 10 à 12, dans laquelle la conduite d'évacuation de la solution absorbante partiellement régénérée (440,540) est positionnée à une hauteur donnée de la colonne de régénération (1007-3,1008-3) au-dessus de la conduite d'évacuation d'une solution absorbante totalement régénérée (420,520).

**FIG. 1**

**ART ANTERIEUR**

**FIG. 2**

**ART ANTERIEUR**

FIG. 3

FIG. 4

FIG. 5

**Europäisches Patentamt**

**European Patent Office**

**Office européen des brevets**

## RAPPORT DE RECHERCHE EUROPEENNE

Numéro de la demande

EP 14 30 6802

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 469 199 A1 (SNAM PROGETTI [IT]) 22 mai 1981 (1981-05-22) | 10-13 | INV. B01D53/14 |
| A | * figure 1 * ----- | 1 | |
| X | GB 870 895 A (FOSTER WHEELER LTD) 21 juin 1961 (1961-06-21) * figures 1,2 * ----- | 10-13 | |
| A | US 2004/253159 A1 (HAKKA LEO E [CA] ET AL) 16 décembre 2004 (2004-12-16) * figures 1-3 * ----- | 1-13 | |
| A | FR 2 986 442 A1 (IFP ENERGIES NOUVELLES [FR]) 9 août 2013 (2013-08-09) * figures 1a,1b * ----- | 1-13 | |
| A | US 3 896 212 A (EICKMEYER ALLEN G) 22 juillet 1975 (1975-07-22) * figure 1 * ----- | 1-13 | |

**DOMAINES TECHNIQUES RECHERCHES (IPC)**

C10L
B01D

Le présent rapport a été établi pour toutes les revendications

| Lieu de la recherche | Date d'achèvement de la recherche | Examinateur |
|---|---|---|
| Munich | 17 mars 2015 | de Biasio, Arnaldo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**    EP 14 30 6802

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-03-2015

| Document brevet cité au rapport de recherche | | Date de publication | Membre(s) de la famille de brevet(s) | | Date de publication |
|---|---|---|---|---|---|
| FR 2469199 | A1 | 22-05-1981 | AR | 221174 A1 | 30-12-1980 |
| | | | AT | 379087 B | 11-11-1985 |
| | | | AU | 536486 B2 | 10-05-1984 |
| | | | AU | 6164480 A | 14-05-1981 |
| | | | BE | 885234 A1 | 16-03-1981 |
| | | | BR | 8005894 A | 19-05-1981 |
| | | | CA | 1148332 A1 | 21-06-1983 |
| | | | CH | 642558 A5 | 30-04-1984 |
| | | | CS | 221980 B2 | 29-04-1983 |
| | | | DD | 153060 A5 | 23-12-1981 |
| | | | DE | 3032470 A1 | 21-05-1981 |
| | | | DK | 383480 A | 09-05-1981 |
| | | | EG | 14582 A | 30-06-1984 |
| | | | ES | 8106839 A1 | 01-12-1981 |
| | | | FR | 2469199 A1 | 22-05-1981 |
| | | | GB | 2062597 A | 28-05-1981 |
| | | | GR | 71713 A1 | 21-06-1983 |
| | | | HU | 186748 B | 30-09-1985 |
| | | | IL | 61051 A | 30-12-1983 |
| | | | IN | 153605 A1 | 28-07-1984 |
| | | | IT | 1193510 B | 08-07-1988 |
| | | | JP | S5667525 A | 06-06-1981 |
| | | | LU | 82772 A1 | 17-04-1981 |
| | | | MW | 3580 A1 | 09-12-1981 |
| | | | NL | 8005224 A | 01-06-1981 |
| | | | NO | 802802 A | 11-05-1981 |
| | | | PH | 16283 A | 26-08-1983 |
| | | | PL | 226654 A1 | 05-06-1981 |
| | | | PT | 71803 A | 01-10-1980 |
| | | | RO | 81870 A1 | 01-06-1983 |
| | | | SE | 443093 B | 17-02-1986 |
| | | | TR | 20694 A | 06-05-1982 |
| | | | US | 4367258 A | 04-01-1983 |
| | | | YU | 212980 A | 31-10-1983 |
| | | | ZA | 8005113 A | 26-08-1981 |
| | | | ZM | 7580 A1 | 23-11-1981 |
| | | | ZW | 19580 A1 | 25-03-1981 |
| GB 870895 | A | 21-06-1961 | AUCUN | | |
| US 2004253159 | A1 | 16-12-2004 | AT | 427780 T | 15-04-2009 |
| | | | BR | PI0411329 A | 25-07-2006 |
| | | | CA | 2528205 A1 | 23-12-2004 |
| | | | CA | 2642328 A1 | 23-12-2004 |
| | | | CA | 2643340 A1 | 23-12-2004 |
| | | | CN | 1835786 A | 20-09-2006 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**

EP 14 30 6802

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-03-2015

| Document brevet cité au rapport de recherche | | Date de publication | Membre(s) de la famille de brevet(s) | | Date de publication |
|---|---|---|---|---|---|
| | | | CN | 101481092 A | 15-07-2009 |
| | | | CN | 101481093 A | 15-07-2009 |
| | | | EA | 200600014 A1 | 27-10-2006 |
| | | | EA | 200700562 A1 | 31-08-2007 |
| | | | EA | 200700563 A1 | 31-08-2007 |
| | | | EP | 1648589 A2 | 26-04-2006 |
| | | | EP | 1806171 A1 | 11-07-2007 |
| | | | EP | 1813343 A1 | 01-08-2007 |
| | | | JP | 4759514 B2 | 31-08-2011 |
| | | | JP | 2006527153 A | 30-11-2006 |
| | | | MX | 266231 B | 23-04-2009 |
| | | | US | 2004253159 A1 | 16-12-2004 |
| | | | WO | 2004110595 A2 | 23-12-2004 |
| FR 2986442 | A1 | 09-08-2013 | FR | 2986442 A1 | 09-08-2013 |
| | | | WO | 2013117828 A1 | 15-08-2013 |
| US 3896212 | A | 22-07-1975 | US | 3851041 A | 26-11-1974 |
| | | | US | 3896212 A | 22-07-1975 |

EPO FORM P0460

Pour tout renseignement concernant cette annexe : voir Journal Officiel de l'Office européen des brevets, No.12/82

**EP 2 873 450 A1**

## RÉFÉRENCES CITÉES DANS LA DESCRIPTION

### Documents brevets cités dans la description

- FR 2913097
- US 4990242 A